# FASCICULE DE BREVET EUROPEEN

(11) **EP 0 434 557 B1**
(45) Date de publication et mention de la délivrance du brevet: **14.12.1994**
(21) Numéro de dépôt: 90403672.0
(22) Date de dépôt: 19.12.1990
(51) Int. Cl.: B01D 11/04

(54) **Colonne pulsée d'extraction liquide-liquide et son procédé d'élimination du précipité d'interface**
Kolonne für die pulsierende Flüssig-flüssig-Extraktion und Verfahren zum Entfernen von Ausfällungen aus der Grenzfläche
Column for the pulsating liquid-liquid-extraction and method for the elimination of a precipitate from an interface

(30) Priorité: 21.12.1989 FR 8916991
(43) Date de publication de la demande: 26.06.1991
(73) Titulaire: COMMISSARIAT A L'ENERGIE ATOMIQUE Etablissement de Caractère Scientifique Technique et Industriel, 75015 Paris (FR)
(72) Inventeur: Coste, Joseph, F-30410 Villeneuve-Les-Avignon (FR)
(74) Mandataire: Signore, Robert

(56) Documents cités:
- EP-A- 0 127 405
- DE-B- 1 078 089
- DE-B- 1 215 107
- US-A- 4 305 907
- US-A- 4 424 131

## Description

Le domaine de l'invention est celui des colonnes pulsées d'extraction mettant en jeu deux phases liquides, l'une légère, l'autre lourde. De telles colonnes sont utilisées entre autres dans des usines de retraitement de produits contaminés radioactivement, tels que des combustibles nucléaires usés.

Les colonnes pulsées utilisées pour deux phases liquides et connues actuellement, comportent généralement une partie supérieure, appelée décanteur supérieur, munie d'une entrée de la phase lourde et d'une sortie de phase légère. Elles comportent également une partie centrale cylindrique d'axe vertical à l'intérieur de laquelle s'effectuent les différentes réactions physiques et chimiques entre les deux phases liquides. Enfin, elles comportent une partie inférieure, appelée décanteur inférieur, dotée d'une entrée de la phase légère et d'une sortie de la phase lourde. Un système de pulsation appliqué à la base de la partie centrale permettant d'engendrer un mouvement de va-et-vient de l'ensemble des deux phases liquides complète l'ensemble. Compte tenu de la différence de densité des deux phases liquides, une interface de séparation des deux phases liquides s'établit à l'intérieur de la colonne.

Dans certaines colonnes pulsées d'extraction, utilisées dans des usines de retraitement, fonctionnant en phase légère solvant continue, l'interface se trouve dans la partie basse de la colonne pour que le solvant, chargé en produits purifiés, ne se pollue pas au contact des produits fortement contaminants qui s'accumulent à l'interface. En effet, dans la zone de séparation où coalesce la phase dispersée, s'accumule un précipité interfacial. Cette couche de précipité se comporte comme une troisième phase localisée entre les deux phases liquides. Elle est constituée par la phase lourde dispersée, dont la coalescence est retardée par la charge de matières particulaires accumulées qui provient d'une clarification imparfaite des solutions d'entrée.

Sans mesure curative spécifique, l'augmentation inévitable de la couche de précipité peut conduire à terme un départ de la phase continue vers la sortie de la phase dispersée coalescée. Cette augmentation peut également réduire les performances de séparation de soluté par la remontée de produits contaminants vers la sortie de la phase légère continue et purifiée. Dans tous les cas, le pilotage de la colonne pulsée s'avère très délicat car il est lié à la détection de la hauteur du plan de l'interface de séparation des phases légère et lourde.

Pour expliciter les inconvénients inhérents à ce phénomène, on peut citer l'exemple d'une usine de retraitement, équipée de telles colonnes pulsées, pour lesquelles il a été nécessaire de procéder à des opérations d'évacuation périodiques du précipité. La périodicité de ces arrêts était de deux à trois semaines. L'opération consistait à arrêter la production pendant plusieurs heures, pour ensuite soutirer la phase aqueuse lourde à fort débit et vidanger une partie du décanteur inférieur.

Le but de la présente invention est de remédier à un tel inconvénient qui entrave largement la fiabilité et la rentabilité de la colonne. Plus précisément, la présente invention vise à éliminer le précipité de l'intérieur de la colonne pulsée, sans arrêter le fonctionnement de celle-ci.

D'autre part, le brevet allemand DE-B-1 215 107 décrit un dispositif d'extraction en continu entre deux phases fluides de densités différentes.

La phase lourde est introduite en haut et la phase légère est introduite en bas. Le niveau de changement de phases se situe dans le décanteur inférieur. A ce niveau débouche une canalisation munie d'une vanne destinée à alimenter un dispositif de purification ou de filtrage. Il est d'ailleurs précisé qu'à ce niveau de changement de phases se trouve la présence d'impuretés. Ce dispositif de filtrage ou de purification est équipé d'un tuyau d'extraction de la phase lourde et de la phase légère en continu.

Or, il s'avère utile de n'intervenir qu'épisodiquement pour procéder à l'élimination du précipité et de ses impuretés. Il s'avère également nécessaire de maintenir celui-ci au niveau des canalisations de soutirage.

A cet effet, un premier objet de l'invention est un procédé d'élimination du précipité formé dans le plan de l'interface de séparation des phases d'une colonne pulsée d'extraction liquide-liquide par extraction au niveau de la couche du précipité, sans arrêter le fonctionnement de la colonne pulsée, au moyen d'un soutirage à débit fixe pratiqué par aspiration à un point de soutirage situé au niveau du plan d'interface de séparation des phases. Selon l'invention, l'extraction consiste à effectuer périodiquement une ponction de précipité et le niveau du plan d'interface est maintenu par adjonction dosée à ce niveau de phase liquide lourde durant la ponction.

Selon l'invention, le procédé consiste à effectuer périodiquement une ponction au niveau de la couche de précipité, sans arrêter le fonctionnement de la colonne pulsée, au moyen d'un soutirage à débit fixe, pratiqué par aspiration à un point de soutirage situé au niveau de l'interface de séparation des phases.

Ce soutirage se complète avantageusement d'un appoint de la phase aqueuse lourde, pratiqué au niveau du plan de l'interface de séparation des phases, pour compenser en phase aqueuse lourde le volume de précipité retiré, et assurer l'évacuation du précipité vers le point de soutirage.

Un deuxième objet principal de l'invention est une colonne pulsée d'extraction, mettant en jeu une première phase liquide légère et une deuxième phase liquide lourde, la colonne comportant une enveloppe cylindrique d'axe vertical, à l'intérieur duquel se trouve l'interface de séparation des phases légère et lourde, au niveau duquel s'accumule un précipité.

Selon l'invention, la colonne est équipée de moyens de soutirage du précipité constitués par :
- une conduite d'extraction débouchant sur l'enveloppe cylindrique au niveau du plan d'interface de séparation des phases, pour extraire le précipité ; et
- une conduite d' appoint débouchant sur l'enveloppe cylindrique au même niveau que celui où débouche la conduite d'extraction, pour amener de la phase liquide lourde, de manière à compenser en phase aqueuse lourde le volume du précipité extrait,
- des moyens pour déclencher périodiquement une ponction du précipité et une adjonction doseé de phase liquide lourde par lesdites conduites (14, 16).

Selon un aspect de l'invention, la colonne est équipée de moyens de détection de la hauteur du plan d'interface de séparation des phases, placés à proximité du plan où débouchent la conduite d'extraction et la conduite d'appoint.

Une réalisation préférentielle de ces moyens de détection est que ceux-ci sont constitués de deux cannes de bullage débouchant à deux niveaux différents, placées en-dessous et en-dessus du plan où débouchent la conduite d'extraction et la conduite d'appoint.

Selon un autre aspect de l'invention, la colonne comprend une première vanne de régulation de débit, placée sur la conduite d'appoint et commandée par un dispositif de régulation, lui-même piloté par un détecteur de hauteur du plan de l'interface de séparation des phases qui reçoit des signaux de mesure issus des deux cannes de bullage, pour alimenter l'intérieur de l'enveloppe cylindrique en phase aqueuse d' appoint, de manière à positionner le niveau de l'interface de séparation des phases au niveau du plan où débouchent les conduites d'extraction et d'appoint, en coopération avec une première conduite de soutirage de la phase lourde placée en bas de l'enveloppe cylindrique ; une deuxième vanne de régulation placée sur la première conduite de soutirage de la phase lourde et commandée par un dispositif de régulation.

L'invention s'applique en particulier à une colonne pulsée d'extraction par solvant, l'enveloppe cylindrique étant le décanteur inférieur de la colonne au niveau duquel se trouve l'interface de séparation des phases.

L'invention et toutes ses caractéristiques techniques seront mieux comprises à la lecture de la description suivante, donnée à titre d'exemple non limitatif.

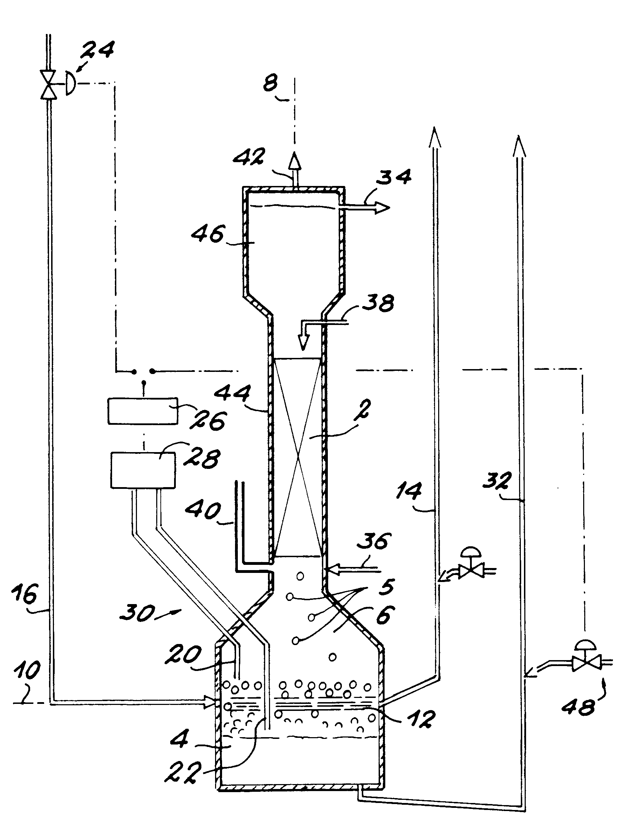

L'unique figure représente l'installation d'une colonne pulsée selon l'invention.

En référence à cette figure, la colonne pulsée d'extraction comprend conventionnellement un décanteur inférieur constitué d'une enveloppe cylindrique 6 d'axe vertical 8. Celle-ci est surmontée de la partie centrale 44 de la colonne pulsée, à l'intérieur de laquelle s'effectuent les différentes transformations physique et chimique entre les deux phases liquides. La phase légère 2 est introduite dans la colonne pulsée par un orifice d'entrée 36, placé dans la partie supérieure de l'enveloppe cylindrique 6 constituant le décanteur inférieur. De manière analogue, la phase lourde 4 est introduite entre la partie centrale 44 et la partie supérieure 46 constituant le décanteur supérieur. La phase lourde 4 a tendance à tomber en direction du décanteur inférieur, sous la forme de gouttelettes 5. Les pulsations qui doivent être imprimées à l'ensemble des deux phases légère et lourde se fait à l'aide d'une source d'air comprimé, appliquée par une conduite de pulsation 40 débouchant en bas de la partie centrale 44, juste au-dessus du décanteur inférieur que constitue l'enveloppe cylindrique 6. Une pression variant périodiquement appliquée à l'ensemble de ces deux phases engendre un mouvement de va-et-vient de l'ensemble.

Le précipité d'interface de séparation des phases 12 se trouve, en fonctionnement normal, dans le décanteur inférieur constitué de l'enveloppe cylindrique 6.

Le principe du procédé selon l'invention consiste à pratiquer une ponction périodique au niveau de cette couche de précipité d'interface 12, sans arrêter la production. Une conduite d'extraction 14 est prévue au niveau de ce décanteur inférieur et débouche sur l'enveloppe cylindrique 6, au niveau où le précipité d'interface 12 a été représenté sur cette figure.

Le soutirage du précipité d'interface 12 provoquant inévitablement une chute de la hauteur de l'interface de séparation des phases, le procédé selon l'invention prévoit de maintenir ce niveau d'interface par adjonctions dosées de phase aqueuse lourde utilisée comme phase d'appoint. Cette adjonction, ou cet appoint, est obtenue au moyen d'une conduite d'appoint 16 débouchant au même niveau que l'endroit où débouche la conduite d'extraction 14. Ce niveau correspond au niveau théorique de l'interface de séparation des phases constituée de la phase dispersée contenant le précipité.

Selon l'invention, le volume de phase aqueuse d'appoint introduit dans le décanteur inférieur est le même que le volume de précipité soutiré, de manière à maintenir constant le niveau de l'interface de séparation des phases, et donc le niveau inférieur du précipité 12. Cet appoint de phase liquide lourde permet également de faciliter l'évacuation du précipité vers le point de soutirage de celui-ci que constitue l'extrémité de la conduite d'extraction 14.

Une nécessité pour la mise en oeuvre de ce procédé est la connaissance de la hauteur, ou du niveau, du plan où se trouve l'interface de séparation des phases entre les deux phases lourde 4 et légère 2. En conséquence, des moyens de détection de cette hauteur sont prévus dans la colonne pulsée d'extraction selon l'invention, à proximité du plan où se trouve l'interface de séparation des phases. Concrètement, les moyens de détection sont positionnés par rapport au plan 10 où débouchent les conduites d'extraction et d'appoint.

De préférence, ces moyens de détection sont constitués de deux cannes de bullage 20 et 22 et débouchant à deux endroits différents placés de part et d'autre en hauteur du plan 10 où se trouve l'interface de séparation des phases, c'est-à-dire de part et d'autre du plan où débouchent les colonnes d'extraction 14 et d'appoint 16. La détection du niveau d'interface de séparation des phases est donc effectuée par la mesure des pressions d'air nécessaires pour assurer le bullage à deux endroits différents du plan 10 de l'interface de séparation des phases. La différence de pression entre les deux bullages effectués par les deux cannes 20 et 22 permet de calculer la masse volumique moyenne de la couche située entre les deux points où débouchent ces deux cannes 20 et 22 et permet également de déterminer la hauteur théorique de ce plan 10 de l'interface de séparation des phases, à partir des masses volumiques connues des deux phases.

L'exploitation de la mesure de pression par bullage est faite par un détecteur de niveau 28 du plan 10 de l'interface de séparation des phases. Celui-ci peut commander un dispositif de régulation 26 pilotant une première vanne de régulation 24, placée sur la conduite d'appoint 16. Il est ainsi possible, en combinaison avec le soutirage de la phase liquide lourde 4 au moyen de la conduite de soutirage 32, de faire monter ou descendre le plan 10 de l'interface de séparation des phases en faisant varier les débits respectifs de la conduite d'appoint 16 et de la conduite de soutirage 32. Le dispositif de régulation 26 commande également une deuxième vanne de régulation 48 placée sur la conduite de soutirage de la phase lourde 32. Cette double régulation permet également de minimiser les éventuelles perturbations du niveau de plan 10 de l'interface de séparation des phases qui dégraderait les performances de la colonne.

En fonctionnement normal, le niveau du plan 10 de l'interface de séparation des phases est régulé par l'extraction de la phase lourde liquide 4 au moyen de la conduite de soutirage 32.

Selon l'invention, l'élimination périodique du précipité 12 s'effectue selon les trois phases suivantes:
- fixation du débit de soutirage de la phase liquide lourde 4, au moyen de la conduite de soutirage 32;
- mise en service de l'extraction du précipité 12 d'interface au moyen de la conduite d'extraction 14; et
- basculement de la régulation au niveau du plan 10 d'interface sur la phase lourde d'appoint à introduire par la conduite d'appoint 16.

Le procédé et le dispositif selon l'invention peuvent également être appliqués à des colonnes pulsées de type annulaire. En effet, pour donner un exemple de réalisation du dispositif selon l'invention appliqué à une colonne pulsée annulaire, on peut citer la mise en oeuvre suivante.

Pour un décanteur inférieur 6 de diamètre de l'ordre du mètre et d'une hauteur égale à environ un mètre, les deux cannes de bullage 20 et 22 peuvent être placées à 120 et 840 mm du fond de ce décanteur inférieur 6. Les conduites d'appoint 16 en phase liquide lourde 4 et d'extraction 14 du précipité peuvent déboucher au niveau situé à une hauteur de 340 mm du fond. Les deux cannes de bullage 20 et 22 peuvent avoir des diamètres égaux à 20 mm. Des essais ont été effectués en phase aqueuse chargée en acide nitrique 3N de masse volumique supérieure à l'eau. La phase solvant était équilibrée et constituée par du tributylphosphate (TBP) dilué à 30° en volume dans un alcane, tel que l'Hyfrane 120, dont la masse volumique est légèrement supérieure à 800 kg/m³. Le précipité est obtenu dans ce cas par formation de mono et de dibutylphosphate de zirconium en phase aqueuse et des acides mono et dibutylphosphoriques en mélange équimoléculaire.

Le débit de la colonne pulsée a été pendant plusieurs jours égal à 2 l/h/cm², avec un rapport du débit aqueux sur le débit solvant, égal à 0,5. L'énergie de pulsation était réglée pour obtenir une rétention aqueuse égale à 10%. Le plan 10 d'interface de séparation des phases s'est situé aux environs de 750 mm du fond. L'évacuation du précipité a été commandée par microprocesseur et s'est concrétisée par les actions suivantes:
- débit de soutirage de la phase lourde fixé à une valeur nominale de 620 l/h;
- le débit d'extraction du précipité a été fixé à 350 l/h; et
- le débit d'appoint de la phase lourde d'acide nitrique 3N a été régulé sur la position du plan 10 de l'interface de séparation des phases à partir d'un régulateur 26 adapté aux caractéristiques de la vanne de la conduite d'appoint 24. La quantité de précipité 12 soutirée pendant cette opération était égale à 457 l. Un fonctionnement normal a suivi l'opération d'extraction du précipité 12.

Le procédé et le dispositif selon l'invention sont applicables à tous les décanteurs inférieurs ou supérieurs où un soutirage forcé de la phase lourde est en service. En effet, l'exemple de réalisation décrit mentionne la présence du plan d'interface de séparation des phases dans le décanteur inférieur 6. On peut très bien envisager d'adapter le procédé selon l'invention à une colonne pulsée dont le fonctionnement impose une interface de séparation des deux phases située dans le décanteur supérieur 46.

## Revendications

1. Procédé d'élimination du précipité (12) formé dans le plan d'interface de séparation de phases d'une colonne pulsée d'extraction liquide-liquide par extraction au niveau de la couche du précipité (12), sans arrêter le fonctionnement de la colonne pulsée, au moyen d'un soutirage à débit fixe pratiqué par aspiration à un point de soutirage situé au niveau du plan (10) d'interface de séparation des phases, caractérisé en ce que l'extraction consiste à effectuer périodiquement une ponction de précipité et en ce que le niveau du plan (10) d'interface est maintenu par adjonction dosée à ce niveau de phase liquide lourde durant la ponction.

2. Procédé selon la revendication 1, caractérisé en ce que l'adjonction de phase liquide lourde est effectuée par un appoint assurant l'évacuation du précipité vers le point de ponction.

3. Colonne pulsée d'extraction, mettant en jeu une première phase liquide légère (2), une deuxième phase liquide lourde (4), la colonne comportant une première enveloppe inférieure cylindrique (6) d'axe vertical (8), les deux phases liquides (2, 4) étant séparées l'une de l'autre par un plan (10) d'interface de séparation de phases au niveau duquel s'accumulent un précipité (12), caractérisée en ce que les moyens de soutirage du précipité (12) sont constituée par :
- une conduite d'extraction (14) débouchant sur l'enveloppe inférieure cylindrique (6) au niveau du plan (10) d'interface de séparation de phases (10) pour extraire le précipité (12) ;
- une conduite d'appoint (16) débouchant sur l'enveloppe cylindrique (6) au même niveau que celui où débouche la conduite d'extraction (14) pour amener de la phase liquide lourde (4),
- des moyens pour déclencher périodiquement une ponction du précipité et une adjonction doseé de phase liquide lourde par lesdites conduites (14, 16).

4. Colonne selon la revendication 3, caractérisée en ce qu'elle comprend des moyens de détection de la hauteur du plan (10) d'interface de séparation des phases placés à proximité du plan où débouchent la conduite d'extraction (14) et la conduite d'appoint (16).

5. Colonne selon La revendication 4, caractérisée en ce que les moyens de détection sont constitués de deux cannes de bullage (20, 22) débouchant à deux niveaux différents placés respectivement en-dessous et au-dessus du plan où débouchent la conduite d'extraction (14) et la conduite d'appoint (16).

6. Colonne selon la revendication 4 ou 5, caractérisée en ce qu'elle comprend:
- une première vanne de régulation de débit (24), placée sur la conduite d'appoint (16) et commandée par un dispositif de régulation (26), lui-même piloté par un détecteur de hauteur (28) du plan (10) d'interface de séparation des phases qui reçoit les signaux de mesure (30) issus des deux cannes de bullage (20, 22) pour alimenter l'intérieur de l'enveloppe cylindrique (6) en phase liquide d'appoint, de manière à positionner le niveau du plan (10) d'interface de séparation de phases au niveau du plan où débouchent les conduites d'extraction (14) et d'appoint (16), en coopération avec une première conduite de soutirage (32) de la phase lourde (4) placée en bas de l'enveloppe cylindrique (6);
- une deuxième vanne de régulation (48), placée sur la première conduite de soutirage (32) de la phase lourde (4) et commandée par le dispositif de régulation (26).

7. Colonne selon l'une quelconque des revendications 3 à 6, fonctionnant par solvant, caractérisée en ce que l'enveloppe cylindrique (6) constitue le décanteur inférieur de la colonne.

## Claims

1. Process for the elimination of the precipitate (12) formed in the phase separation interface plane of a pulsed liquid-liquid extraction column by extraction at the level of the layer of the precipitate (12) and without stopping the operation of the pulsed column by means of a fixed flow rate drawing off performed by suction at a drawing off point level with the phase separation interface plane (10), characterized in that the extraction consists of periodically carrying out a precipitate tapping and in that the level of the interface plane (10) is maintained by the dosed addition at this level of heavy liquid phase during tapping.

2. Process according to claim 1, characterized in that heavy liquid phase addition takes place by a topping up ensuring the discharge of the precipitate to the tapping point.

3. Pulsed extraction column using a first light liquid phase (2), a second heavy liquid phase (4), the column having a first, vertically axed (8), lower cylindrical envelope (6), the two liquid phases (2,4) being separated from one another by the phase separation interface plane (10) at the level of which accumulates a precipitate (12), characterized in that the drawing off means of the precipitate (12) are constituted by an extraction pipe (14) issuing onto the lower cylindrical envelope (6) level with the phase separation interface plane (10) for extracting the precipitate (12), a topping up pipe (16) issuing onto the cylindrical envelope (6) at the same level as that where the extraction pipe (14) issues for supplying the heavy liquid phase (4) and means for periodically initiating a tapping of the precipitate and a dosed addition of heavy liquid phase by said pipes (14,16).

4. Column according to claim 3, characterized in that it comprises means for detecting the height of the phase separation interface plane (10) positioned in the vicinity of the plane where the extraction pipe (14) and the topping up pipe (16) issue.

5. Column according to claim 4, characterized in that the detection means are constituted by two bubbling through pipes (20,22) issuing at two different levels respectively below and above the plane where the extraction pipe (14) and the topping up pipe (16) issue.

6. Column according to claim 4 or 5, characterized in that it comprises a first flow regulating valve (24) placed on the topping up pipe (16) and controlled by a regulating device (26), which is in turn controlled by a detector (28) of the height of the phase separation interface plane (10) and which receives measuring signals (30) from the two bubbling through pipes (20,22) in order to supply the interior of the cylindrical envelope (6) with topping up liquid phase, so as to position the level of the phase separation interface plane (10) at the plane where the extraction pipe (14) and the topping up pipe (16) issue, in cooperation with a first drawing off pipe (32) of the heavy phase (4) placed at the bottom of the cylindrical envelope (6) and a second regulating valve (48) placed on the first drawing off pipe (32) of the heavy phase (4) and controlled by the regulating device (26).

7. Column according to any one of the claims 3 to 6, operating by means of a solvent, characterized in that the cylindrical envelope (6) constitutes the lower decanter of the column.

## Patentansprüche

1. Verfahren zum Entfernen von Ausfällungen (12), die an der Trenngrenzfläche der Phasen einer Kolonne für die pulsierende Flüssig-flüssig-Extraktion auf der Höhe der Ausfällungsschicht (12) gebildet sind, ohne den Betrieb der pulsierenden Kolonne anzuhalten, mittels Abziehens mit fester Strömungsmenge, das durch Ansaugen an einem Abziehpunkt durchgeführt wird, der sich auf der Höhe der Ebene (10) einer Trenngrenzfläche der Phasen befindet, **dadurch gekennzeichnet**, daß die Extraktion darin besteht, periodisch eine Entnahme der Ausfällungen durchzuführen, und daß die Höhe der Ebene (10) der Grenzfläche auf dieser Höhe durch dosiertes Hinzufügen von schwerer Flüssigphase während der Entnahme beibehalten wird.

2. Verfahren gemäß Anspruch 1, **dadurch gekennzeichnet**, daß das Hinzüfügen der schweren Flüssigphase durch eine Ergänzung durchgeführt wird, die das Austragen der Ausfällungen an dem Entnahmepunkt sicherstellt.

3. Kolonne für die pulsierende Extraktion, wobei es sich um eine erste, leichte Flüssigphase (2) und eine zweite, schwere Flüssigphase (4) handelt, wobei die Kolonne einen ersten, unteren, zylindrischen Mantel (6) mit vertikaler Achse (8) umfaßt, die zwei Flüssigphasen (2, 4) voneinander durch eine Ebene (10) einer Trenngrenzfläche der Phasen getrennt sind, auf deren Höhe sich Ausfällungen (12) ansammeln, **dadurch gekennzeichnet**, daß die Mittel zum Abziehen der Ausfällungen (12) gebildet sind von:
- einer Abziehleitung (14), die an dem unteren, zylindrischen Mantel (6) auf der Höhe der Ebene (10) der Trenngrenzfläche der Phasen (10) mündet, um die Ausfällungen (12) abzuziehen;
- einer Zuführleitung (16), die an dem zylindrischen Mantel (6) auf derselben Höhe wie diejenige mündet, wo die Abziehleitung (14) mündet, um die schwere Flüssigphase (4) zuzuführen,
- Einrichtungen, um periodisch eine Entnahme der Ausfällungen und ein dosiertes Hinzufügen von schweren Flüssigphase durch die genannten Leitungen (14, 16) auszulösen.

4. Kolonne gemäß Anspruch 3, **dadurch gekennzeichnet**, daß sie Einrichtungen zum Erfassen der Höhe der Ebene (10) der Trenngrenzfläche der Phasen umfaßt, die nahe der Ebene angeordnet sind, wo die Abziehleitung (14) und die Zuführleitung (16) münden.

5. Kolonne gemäß Anspruch 4, **dadurch gekennzeichnet**, daß die Erfassungseinrichtungen von zwei Rohren zum Durchperlen (20, 22) gebildet sind, die auf zwei unterschiedlichen Höhen münden, die jeweils unterhalb und oberhalb der Ebene angeordnet sind, wo die Abziehleitung (14) und die Zufuhrleitung (16) münden.

6. Kolonne gemäß Anspruch 4 oder 5, **dadurch gekennzeichnet**, daß sie umfaßt:
ein erstes Stellventil für die Durchflußleistung (24), das in der Zufuhrleitung (16) angeordnet und durch eine Regeleinrichtung (26) gesteuert wird, die selbst von einer Höhenerfassungseinrichtung (28) der Ebene (10) der Trenngrenzfläche der Phasen gesteuert wird, die die Meßsignale (30) empfängt, die von den zwei Rohren zum Durchperlen (20, 22) abgegeben werden, um das Innere des zylindrischen Mantels (6) mit Flüssigphase zum Ergänzen in Zusammenarbeit mit einer ersten Austragsleitung (32) der schweren Phase (4), die am Fuß des zylindrischen Mantels (6) angeordnet ist, derart zu versorgen, daß die Höhe der Ebene (10) der Trenngrenzfläche der Phasen auf der Höhe der Ebene positioniert wird, wo die Abziehleitung (14) und die Zufuhrleitung (16) münden
- ein zweites Stellventil (48), das in der ersten Austragsleitung (32) der schweren Phase (4) angeordnet ist und durch die Regeleinrichtung (26) gesteuert wird.

7. Kolonne gemäß irgendeinem der Ansprüche 3 bis 6, die durch ein Lösungsmittel arbeitet, **dadurch gekennzeichnet**, daß der zylindrische Mantel (6) den unteren Dekanteur der Kolonne bildet.
